# EUROPÄISCHE PATENTSCHRIFT

(11) **EP 3 698 460 B1**
(45) Veröffentlichungstag und Bekanntmachung des Hinweises auf die Patenterteilung: **06.09.2023**
(21) Anmeldenummer: 17816572.6
(22) Anmeldetag: 30.11.2017
(51) Int. Cl.: H02M 1/06

(54) **TEILMODULE SOWIE ANORDNUNGEN MIT TEILMODULEN**
SUB-MODULES AND ASSEMBLIES COMPRISING SUB-MODULES
SOUS-MODULES ET DISPOSITIFS À SOUS-MODULES

(43) Veröffentlichungstag der Anmeldung: 26.08.2020
(73) Patentinhaber: Siemens Energy Global GmbH & Co. KG, 81739 München (DE)
(72) Erfinder: ALVAREZ VALENZUELA, Rodrigo Alonso, 90408 Nürnberg (DE); SCHUSTER, Dominik, 91456 Diespeck (DE); ZENKNER, Andreas, 90587 Veitsbronn (DE)
(86) Internationale Anmeldenummer: PCT/EP2017/080934
(87) Internationale Veröffentlichungsnummer: WO 2019/105550

(56) Entgegenhaltungen:
- EP-A1- 2 940 845
- EP-A2- 2 688 190
- WO-A1-2011/120572
- WO-A1-2013/071957
- LI PENG ET AL: "Thyristor based modular multilevel converter with active full-bridge chain-link for forced commutation", 2016 IEEE 17TH WORKSHOP ON CONTROL AND MODELING FOR POWER ELECTRONICS (COMPEL), IEEE, 27 June 2016 (2016-06-27), pages 1-6, XP032955267, DOI: 10.1109/COMPEL.2016.7556658 [retrieved on 2016-08-30]
- LI PENG ET AL: "Active-Forced-Commutated Bridge Using Hybrid Devices for High Efficiency Voltage Source Converters", IEEE TRANSACTIONS ON POWER ELECTRONICS, INSTITUTE OF ELECTRICAL AND ELECTRONICS ENGINEERS, USA, vol. 32, no. 4, 1 April 2017 (2017-04-01), pages 2485-2489, XP011639839, ISSN: 0885-8993, DOI: 10.1109/TPEL.2016.2622298 [retrieved on 2017-01-23]

## Beschreibung

Die Erfindung bezieht sich auf ein Teilmodul mit einem ersten äußeren Anschluss und einem zweiten äußeren Anschluss, wobei zwischen die zwei äußeren Anschlüsse mindestens ein erster Schalter und dazu parallel eine elektrische Reihenschaltung geschaltet ist, die einen zweiten Schalter und einen elektrischen Energiespeicher umfasst.

Teilmodule dieser Art sind beispielsweise in der Druckschrift "Modular Multilevel Converter: An universal concept for HVDC-Networks and extended DC-Bus-Applications" (R. Marquardt, 2010 International Power Electronics Conference, Seiten 502 bis 507, 978-1-4244-5393-1/10, 2010 IEEE) beschrieben. In der Druckschrift sind Teilmodule offenbart, die Halb- und Vollbrücken bilden. Die Schalter der Teilmodule sind IGBT's (Bipolartransistoren mit isolierter Gate-Elektrode).

Die WO 2013/071957 A1 offenbart ein Teilmodul für einen modularen Mehrstufenumrichter. Das Teilmodul weist einen Brückenzweig zwischen den Ausgangsklemmen. In dem Brückenzweig sind ein Leistungshalbleiterschalter sowie eine antiparallele Diode angeordnet. Der Leistungshalbleiter ist ein IGCT.

Ähnlich beschreibt auch die EP 2 688 190 A2 ein Teilmodul, wobei die Leistungshalbleiter des Teilmoduls IGBT, IGCT, MOSFET, etc. mit jeweils einer antiparallelen Diode sein können.

Die WO 2011/120572 A1 offenbart ein weiteres Teilmodul, bei dem die Leistungshalbleiter IGBT, IGCT oder MOSFET sind.

Bei einem Teilmodul der EP 2 940 845 A1 ist eine Schutzschaltung aus antiparallelen Bypass-Thyristoren zwischen den Ausgangsklemmen geschaltet.

Der Erfindung liegt die Aufgabe zugrunde, ein gegenüber dem Stand der Technik verbessertes Teilmodul anzugeben.

Diese Aufgabe wird erfindungsgemäß durch ein Teilmodul mit den Merkmalen gemäß Patentanspruch 1 gelöst. Vorteilhafte Ausgestaltungen des erfindungsgemäßen Teilmoduls sind in Unteransprüchen angegeben.

Danach ist erfindungsgemäß vorgesehen, dass der erste Schalter ein Thyristor ist oder einen Thyristor zumindest auch umfasst.

Ein wesentlicher Vorteil des erfindungsgemäßen Teilmoduls ist darin zu sehen, dass durch den Einsatz eines Thyristors als erstem Schalter bzw. als Schalter zwischen den beiden äußeren Anschlüssen des Teilmoduls besonders geringe elektrische Verluste im Durchlasszustand bzw. Durchschaltzustand des Teilmoduls auftreten, insbesondere deutlich geringere Verluste als bei Teilmodulen mit IGBT's.

Außerdem bieten Thyristoren den Vorteil eines sicheren Ausfallzustands, weil sie im Falle eines Ausfalls in Durchlassrichtung wie Dioden leitend sind.

Mit Blick auf ein einfaches Ausschalten des ersten Schalters bzw. des Thyristors weist das Teilmodul eine Ausschaltschaltung auf, die im aktiven Betrieb einen Ausschaltstrom in den Thyristor einspeisen kann, der von dem Kathodenanschluss des Thyristors in Richtung Anodenanschluss des Thyristors fließt und geeignet ist, einen von dem Anodenanschluss zu dem Kathodenanschluss durch den Thyristor fließenden Flussstrom zu kompensieren und den Thyristor auszuschalten.

Die Ausschaltschaltung ist eingangsseitig an den Energiespeicher angeschlossen und wird eingangsseitig mit der Spannung am Energiespeicher beaufschlagt. Ausgangsseitig ist die Ausschaltschaltung an den Kathodenanschluss und den Anodenanschluss des Thyristors angeschlossen.

Von dem ersten äußeren Anschluss in Richtung des zweiten äu-βeren Anschlusses gesehen liegt der Thyristor vorzugsweise in Durchlassrichtung.

Zu dem zweiten Schalter ist vorzugsweise eine Freilaufdiode parallel geschaltet, die von dem ersten äußeren Anschluss in Richtung des zweiten äußeren Anschlusses gesehen ebenfalls in Durchlassrichtung liegt.

Erfindugsgemäß ist vorgesehen, dass zu dem Thyristor elektrisch ein weiterer Thyristor antiparallel liegt. Der weitere Thyristor bildet im eingeschalteten Zustand einen Freilaufpfad.

Das Teilmodul bildet vorzugsweise ein elektrisches Halbbrückenmodul, das zwischen dem ersten und zweiten äußeren Anschluss ausschließlich eine positive Spannung ausgeben kann. Alternativ wird ein Teilmodul in Form eines elektrisch äquivalenten Vollbrückenmoduls als vorteilhaft angesehen, das zwischen dem ersten und zweiten äußeren Anschluss wahlweise eine positive Spannung, keine Spannung (bzw. Null) oder eine negative Spannung ausgeben kann.

Insbesondere mit Blick auf die letztgenannte Ausgestaltung wird es als vorteilhaft angesehen, wenn zwischen die zwei äu-βeren Anschlüsse des Teilmoduls parallel eine weitere elektrische Reihenschaltung geschaltet ist, die einen dritten Schalter und einen weiteren elektrischen Energiespeicher umfasst. Eine solche weitere Reihenschaltung ermöglicht es in vorteilhafter Weise, die eingangs erwähnte Ausschaltschaltung wegzulassen, weil ein Ausschalten des Thyristors durch die weitere Reihenschaltung bewirkt werden kann.

Bei der letztgenannten Ausführungsvariante ist es vorteilhaft, wenn zu dem zweiten Schalter eine Freilaufdiode parallel geschaltet ist, die von dem ersten äußeren Anschluss des Teilmoduls in Richtung des zweiten äußeren Anschlusses des Teilmoduls gesehen in Durchlassrichtung liegt, und zu dem dritten Schalter eine Freilaufdiode parallel geschaltet ist, die von dem ersten äußeren Anschluss des Teilmoduls in Richtung des zweiten äußeren Anschlusses des Teilmoduls gesehen in Sperrrichtung liegt.

Der zweite Schalter wird vorzugsweise durch eine Reihenschaltung und/oder Parallelschaltung zweier oder mehr elektrischer Einzelschaltelemente gebildet, insbesondere wenn die Spannungsfestigkeit und/oder die Stromführungsfähigkeit des zweiten Schalters erhöht werden soll.

Der dritte Schalter wird vorzugsweise durch eine Reihenschaltung und/oder Parallelschaltung zweier oder mehr elektrischer Einzelschaltelemente gebildet, insbesondere wenn die Spannungsfestigkeit und/oder die Stromführungsfähigkeit des dritten Schalters erhöht werden soll.

Die Erfindung bezieht sich darüber hinaus auf eine Anordnung, bei der zumindest zwei Teilmodule elektrisch in Reihe geschaltet sind. Bezüglich einer solchen Anordnung ist erfindungsgemäß vorgesehen, dass die Teilmodule wie oben beschrieben ausgeführt sind.

Vorteilhaft ist es, wenn die Anordnung eine Umrichteranordnung, einen Multilevelumrichter, eine Spannungsstabilisierungseinrichtung oder einen Blindleistungssteller bildet.

Bei einer besonders bevorzugten Ausgestaltung der Anordnung ist vorgesehen, dass diese zumindest einen Wechselspannungsanschluss, an dem ein Wechselstrom eingespeist oder entnommen werden kann, und zwei Gleichspannungsanschlüsse, an denen ein Gleichstrom eingespeist oder entnommen werden kann, aufweist, die Umrichteranordnung zumindest zwei parallel geschaltete Reihenschaltungen umfasst, deren äußere Anschlüsse jeweils einen der Gleichspannungsanschlüsse der Umrichteranordnung bilden, und jede der parallel geschalteten Reihenschaltungen jeweils mindestens zwei in Reihe geschaltete Teilmodule, wie sie oben beschrieben worden sind, umfasst.

Bei einer anderen besonders bevorzugten Ausgestaltung der Anordnung ist vorgesehen, dass diese drei elektrisch im Dreieck oder im Stern geschaltete Konvertermodule aufweist, die jeweils mindestens zwei in Reihe geschaltete Teilmodule, wie sie oben beschrieben worden sind, umfasst.

Die Erfindung wird nachfolgend anhand von Ausführungsbeispielen näher erläutert; dabei zeigen beispielhaft
- Figur 1: ein Ausführungsbeispiel für ein erfindungsgemäßes Teilmodul, das elektrisch ein Halbbrückenmodul bildet und bei dem zwischen zwei äußeren Anschlüssen des Teilmoduls zwei Thyristoren elektrisch antiparallel zueinander geschaltet sind,
- Figur 2: ein Ausführungsbeispiel für ein Teilmodul, das nicht unter den Anspruchsgegenstand fällt und das ein Halbbrückenmodul bildet und bei dem zwischen zwei äußeren Anschlüssen des Teilmoduls ein Thyristor und dazu elektrisch antiparallel eine Diode geschaltet sind,
- Figur 3: ein Ausführungsbeispiel für ein erfindungsgemäßes Teilmodul, das elektrisch ein Halbbrückenmodul bildet und bei dem in einer zwischen zwei äußeren Anschlüssen des Teilmoduls liegenden Reihenschaltung zwei Einzelschaltelemente in Reihe liegen,
- Figur 4: ein Ausführungsbeispiel für ein erfindungsgemäßes Teilmodul, das elektrisch ein äquivalentes Vollbrückenmodul bildet und bei dem zwischen zwei äußeren Anschlüssen des Teilmoduls zwei elektrisch parallel geschaltete Reihenschaltungen jeweils zumindest einen Schalter und einen Energiespeicher aufweisen,
- Figur 5: eine Ausführungsvariante des Teilmoduls gemäß Figur 4, bei der in jeder Reihenschaltung zwischen den äußeren Anschlüssen des Teilmoduls jeweils zwei Einzelschaltelemente in Reihe mit einem Energiespeicher liegen, und
- Figur 6: eine Ausführungsvariante des Teilmoduls gemäß Figur 4, bei dem in zumindest einer der beiden zwischen den beiden äußeren Anschlüssen liegenden Reihenschaltungen ein Schalter durch zwei parallel geschaltete Einzelschaltelemente gebildet ist,
- Figur 7: ein Ausführungsbeispiel für einen modularen Multilevelumrichter, der Teilmodule, wie sie beispielhaft im Zusammenhang mit den Figuren 1 bis 6 gezeigt und erläutert werden, aufweist, und
- Figur 8: ein Ausführungsbeispiel für einen Umrichter, bei dem aus Teilmodulen gemäß den Figuren 1 bis 6 gebildete Konvertermodule elektrisch im Dreieck geschaltet sind.

In den Figuren werden der Übersicht halber für identische oder vergleichbare Komponenten stets dieselben Bezugszeichen verwendet.

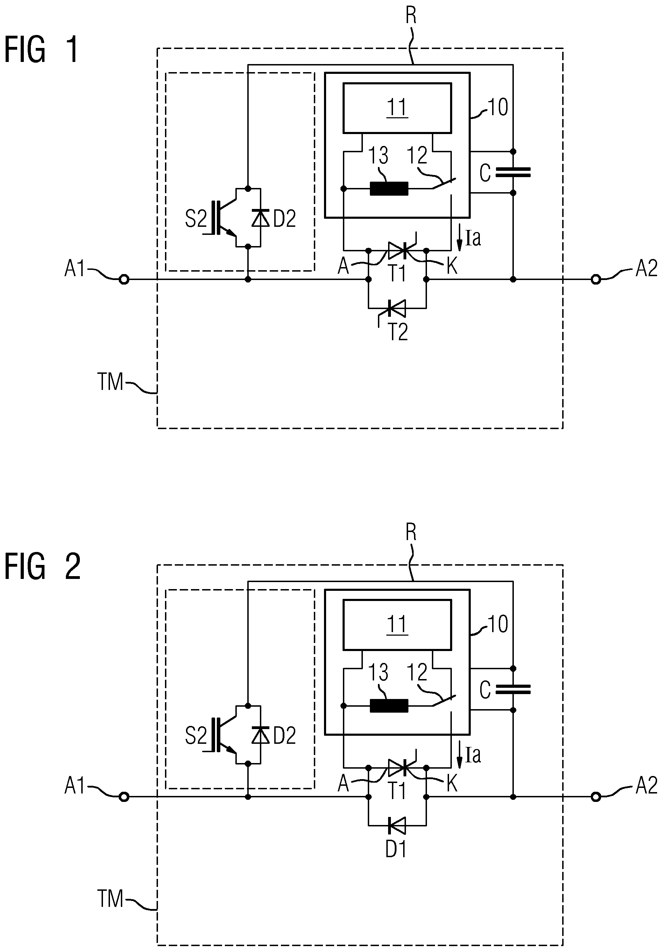

Die Figur 1 zeigt ein Ausführungsbeispiel für ein Teilmodul TM, das einen ersten äußeren Anschluss A1 und einen zweiten äußeren Anschluss A2 aufweist. Zwischen den zwei äußeren Anschlüssen A1 und A2 des Teilmoduls TM ist ein erster Schalter geschaltet, der durch einen ersten Thyristor T1 gebildet ist. Der erste Thyristor T1 liegt vom ersten Anschluss A1 in Richtung des zweiten Anschlusses A2 des Teilmoduls TM gesehen in Durchlassrichtung.

Parallel zu dem ersten Thyristor T1 liegt ein zweiter Thyristor T2 elektrisch antiparallel, also vom ersten Anschluss A1 in Richtung des zweiten Anschlusses A2 des Teilmoduls TM gesehen in Sperrrichtung.

Zwischen die beiden äußeren Anschlüsse A1 und A2 ist darüber hinaus eine Reihenschaltung R geschaltet, die einen zweiten Schalter S2 und einen elektrischen Energiespeicher in Form eines elektrischen Kondensators C umfasst. Parallel zu dem zweiten Schalter S2 liegt eine Freilaufdiode D2, die vom ersten Anschluss A1 in Richtung des zweiten Anschlusses A2 gesehen in Durchlassrichtung geschaltet ist.

Um den durch den ersten Thyristor T1 gebildeten ersten Schalter ausschalten zu können, ist bei dem Teilmodul TM eine Ausschaltschaltung 10 vorgesehen, die elektrisch parallel zu dem ersten Thyristor T1 liegt und im aktiven Betrieb einen Ausschaltstrom Ia in Form eines negativen Stromstoßes in den ersten Thyristor T1 einspeisen kann. Der Ausschaltstrom Ia fließt von dem Kathodenanschluss K des ersten Thyristors T1 in Richtung des Anodenanschlusses A und ist geeignet, den vom Anodenanschluss A zu dem Kathodenanschluss K des ersten Thyristors T1 fließenden Flussstrom zu kompensieren und dadurch den Thyristor T1 auszuschalten.

Die Ausschaltschaltung 10 ist bei dem Ausführungsbeispiel gemäß Figur 1 eingangsseitig an den Kondensator C angeschlossen und wird vom Kondensator C mit Strom versorgt.

Die Ausschaltschaltung 10 weist ein Steuermodul 11 auf, das mit einem Schaltelement 12 und einer Induktivität 13 zusammenarbeitet und das bei der in der Figur 1 dargestellten Schaltstellung des Schaltelements 12 den erwähnten Ausschaltstrom Ia in den ersten Thyristor T1 einspeisen kann.

Das Teilmodul TM wird während des Betriebs von einer in der Figur 1 aus Gründen der Übersicht nicht weiter dargestellten Steuereinrichtung angesteuert, die Steuersignale zum Zünden der beiden Thyristoren T1 und T2, zur Aktivierung der Ausschaltschaltung 10 sowie zum Umschalten des zweiten Schalters S2 bereitstellt. Bezüglich möglicher Betriebsarten des durch den ersten Thyristor T1 gebildeten ersten Schalters und des zweiten Schalters S2 kann auf die einschlägige Literatur, insbesondere die eingangs genannte Druckschrift, verwiesen werden, die hier entsprechend gilt, denn die beiden Schalter T1 und S2 können zum Betrieb des Teilmoduls TM genauso ein- oder ausgeschaltet werden wie die IGBTs bei den Teilmodulen der eingangs genannten Druckschrift.

Ein Vorteil des Teilmoduls TM gemäß Figur 1 gegenüber dem eingangs beschriebenen Stand der Technik besteht darin, dass der als erster Schalter fungierende Thyristor T1 elektrisch weniger Verluste hervorruft als ein IGBT, wenn er den Strom vom ersten Anschluss A1 zum zweiten Anschluss A2 und somit an der Reihenschaltung R vorbei leitet.

Ein weiterer Vorteil des Teilmoduls TM gegenüber dem eingangs beschriebenen Stand der Technik besteht in der Eigenschaft des Thyristors T1, im Falle eines Ausfalls elektrisch leitfähig zu sein und damit das Teilmodul TM sicher inaktiv zu schalten.

Die beiden Thyristoren T1 und T2 werden vorzugsweise durch Scheiben-Thyristoren bzw. sogenannte "Press-Pack-Thyristoren" gebildet.

Die Figur 2 zeigt eine Ausführungsvariante des Teilmoduls TM gemäß Figur 1, die den ersten Schalter in Form des Thyristors T1, den zweiten Schalter S2 mit der parallel geschalteten Freilaufdiode D2 sowie den Kondensator C gemäß Figur 1 umfasst.

Im Unterschied zu dem Ausführungsbeispiel gemäß Figur 1 ist bei dem Ausführungsbeispiel gemäß Figur 2 parallel zu dem ersten Thyristor T1 kein zweiter Thyristor antiparallel geschaltet, sondern statt dessen eine Freilaufdiode D1 und diese Ausführungsvariante fällt somit nicht unter den Anspruchsgegenstand.

Der Thyristor T1 ist vorzugsweise ein Scheiben-Thyristor bzw. "Press-Pack-Thyristor" und die Freilaufdiode D1 ist vorzugsweise eine "Press-Pack-Diode". Im Übrigen gelten die obigen Ausführungen im Zusammenhang mit der Figur 1 entsprechend.

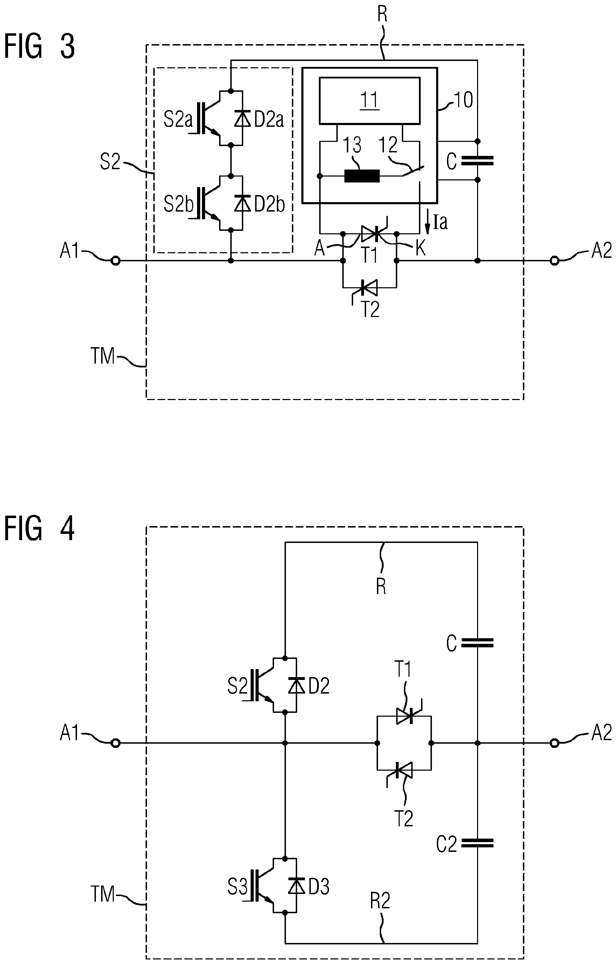

Die Figur 3 zeigt ein Ausführungsbeispiel für ein Teilmodul TM, das vom Aufbau her - mit Ausnahme der Ausgestaltung des zweiten Schalters S2 - dem Teilmodul TM gemäß Figur 1 entspricht. Der zweite Schalter S2 wird bei dem Ausführungsbeispiel gemäß Figur 3 durch zwei Einzelschaltelemente S2a und S2b gebildet, die elektrisch in Reihe geschaltet sind. Zu den beiden Einzelschaltelementen S2a und S2b ist jeweils elektrisch eine Freilaufdiode D2a und D2b parallel geschaltet.

Die Ausgestaltung gemäß Figur 3 erhöht die Spannungsfestigkeit des zweiten Schalters S2, da eine an dem zweiten Schalter S2 anliegende Spannung von beiden Einzelschaltelementen S2a und S2b aufgenommen bzw. getragen werden kann.

Im Übrigen gelten die obigen Ausführungen im Zusammenhang mit der Figur 1 bei dem Ausführungsbeispiel gemäß Figur 3 entsprechend.

Die Figur 4 zeigt ein Ausführungsbeispiel für ein Teilmodul TM, das die Komponenten des Teilmoduls TM gemäß Figur 1 umfasst, also den ersten Schalter in Form eines ersten Thyristors T1, einen dazu antiparallel geschalteten zweiten Thyristor T2, einen zweiten Schalter S2 mit einer parallel geschalteten Freilaufdiode D2 und einen Kondensator C als Energiespeicher. Zusätzlich zu diesen Komponenten weist das Teilmodul TM gemäß Figur 4 eine weitere elektrische Reihenschaltung R2 auf, die elektrisch zwischen die zwei äußeren Anschlüsse A1 und A2 des Teilmoduls geschaltet ist. Die weitere elektrische Reihenschaltung R2 umfasst einen dritten Schalter S3 mit einer dazu parallel geschalteten Freilaufdiode D3 sowie einen weiteren Energiespeicher in Form eines weiteren Kondensators C2.

Die weitere Reihenschaltung R2 mit dem dritten Schalter S3 und dem weiteren Kondensator C2 ermöglicht in vorteilhafter Weise ein Ausschalten des ersten Thyristors T1 ohne die bei dem Ausführungsbeispiel gemäß den Figuren 1 bis 3 vorgesehene Ausschaltschaltung 10, da der Thyristor T1 ausgeschaltet werden kann, indem durch Einschalten des dritten Schalters S3 ein Strom - gespeist vom Kondensator C2 - in Gegenrichtung in den ersten Thyristor T1 eingespeist wird.

In der Figur 4 lässt sich außerdem erkennen, dass die elektrische Verschaltung der Freilaufdioden D2 und D3 invers ist: Die Freilaufdiode D2 des zweiten Schalters S2 liegt vom ersten Anschluss A1 in Richtung des zweiten Anschlusses A2 gesehen in Durchlassrichtung, wohingegen die Freilaufdiode D3 des dritten Schalters S3 in Sperrrichtung liegt.

Im Übrigen gelten die obigen Ausführungen im Zusammenhang mit dem Ausführungsbeispiel gemäß Figur 1 bei dem Ausführungsbeispiel gemäß Figur 4 entsprechend.

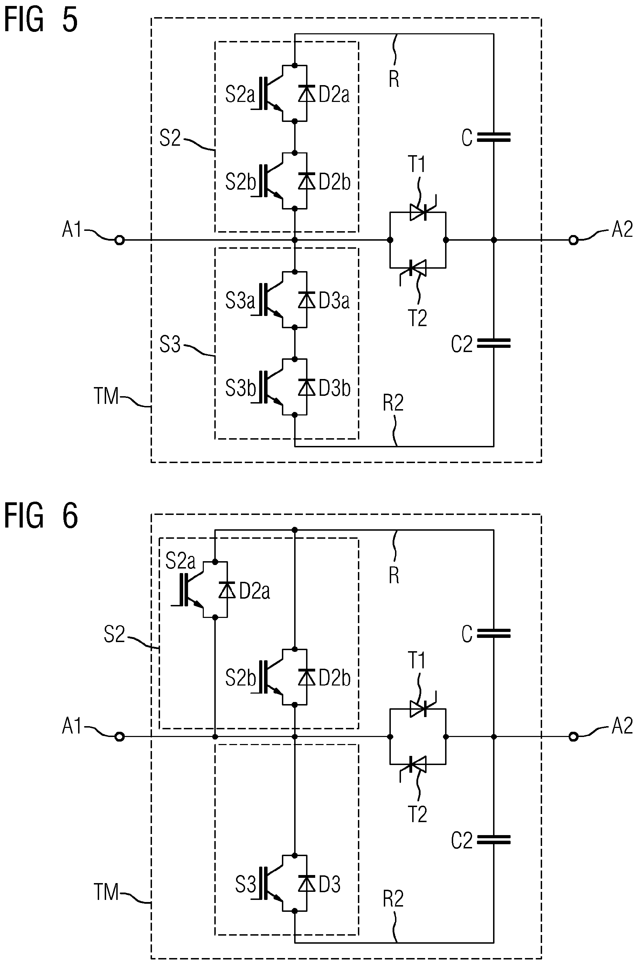

Die Figur 5 zeigt eine Ausführungsvariante des Teilmoduls gemäß Figur 4. Bei der Ausführungsvariante gemäß Figur 5 sind der zweite Schalter S2 und der dritte Schalter S3 jeweils durch eine Reihenschaltung elektrischer Einzelschaltelemente S2a, S2b, S3a und S3b gebildet, zu denen jeweils eine Freilaufdiode D2a, D2b, D3a bzw. D3b parallel geschaltet ist. Durch die Ausgestaltung der beiden Schalter S2 und S3 als Reihenschaltung von Einzelschaltelementen wird die Spannungstragfähigkeit der Schalter S2 und S3 in vorteilhafter Weise erhöht.

Die Figur 6 zeigt eine weitere Ausführungsvariante für das Teilmodul TM gemäß Figur 4. Bei der Ausführungsvariante gemäß Figur 6 ist der zweite Schalter S2 durch eine Parallelschaltung zweier Einzelschaltelemente S2a und S2b gebildet, zu denen jeweils eine Freilaufdiode D2a und D2b parallel geschaltet ist. Durch die Parallelschaltung von Einzelschaltelementen zur Bildung des zweiten Schalters S2 wird die Stromtragfähigkeit des zweiten Schalters S2a erhöht, insbesondere verdoppelt. Eine erhöhte Stromtragfähigkeit im positiven Zweig des Teilmoduls TM bzw. in der in der Figur 6 oberen Reihenschaltung R des Teilmoduls TM ist von besonderem Vorteil, da der positive Zweig in der Regel elektrisch deutlich höher belastet ist als der negative Zweig, der durch die in der Figur 6 untere Reihenschaltung R2 des Teilmoduls TM gebildet ist.

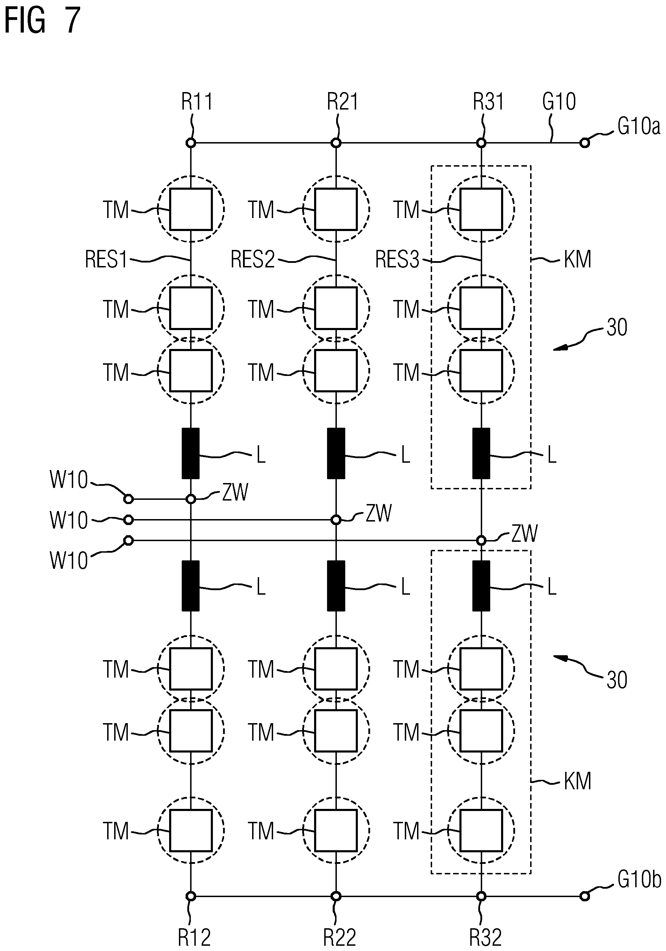

Die Figur 7 zeigt ein Ausführungsbeispiel für eine Umrichteranordnung in Form eines dreiphasigen modularen Multilevelumrichters 30, der Teilmodule TM, wie sie beispielhaft in den Figuren 1 bis 6 gezeigt sind, aufweist. Der Multilevelumrichter 30 umfasst Wechselspannungsanschlüsse W10 zum Einspeisen oder zur Entnahme von Wechselstrom. Darüber hinaus ist er mit einer Gleichspannungsseite G10 ausgestattet, die zwei Gleichspannungsanschlüsse G10a und G10b umfasst, über die Gleichstrom eingespeist oder entnommen werden kann.

Der Multilevelumrichter 30 gemäß Figur 7 weist drei parallel geschaltete Reihenschaltungen RES1, RES2 und RES3 auf, deren äußere Anschlüsse R11, R21 und R31 mit dem Gleichspannungsanschluss G10a in Verbindung stehen. Die äußeren Anschlüsse R12, R22 und R32 stehen mit dem Gleichspannungsanschluss G10b der Gleichspannungsseite G10 in Verbindung. Mit anderen Worten bilden also die äußeren Anschlüsse der drei Reihenschaltungen RES1, RES2 und RES3 die Gleichspannungsseite G10 des Multilevelumrichters 30.

Bei dem Ausführungsbeispiel gemäß Figur 7 ist jede der drei Reihenschaltungen RES1, RES2 und RES3 jeweils durch zwei Konvertermodule KM gebildet, die jeweils aus drei oder mehr in Reihe geschalteten Teilmodulen TM gemäß den Figuren 1 bis 6 und einer Induktivität L bestehen. Jeweils zwischen zwei Konvertermodulen KM - hier jeweils zwischen zwei Induktivitäten L - befindet sich ein Zwischenanschluss ZW, der potentialmä-ßig zwischen den in der Figur 7 oberen drei Teilmodulen und den in Figur 7 unteren drei Teilmodulen liegt und einen der drei Wechselspannungsanschlüsse W10 des Multilevelumrichters 30 bildet.

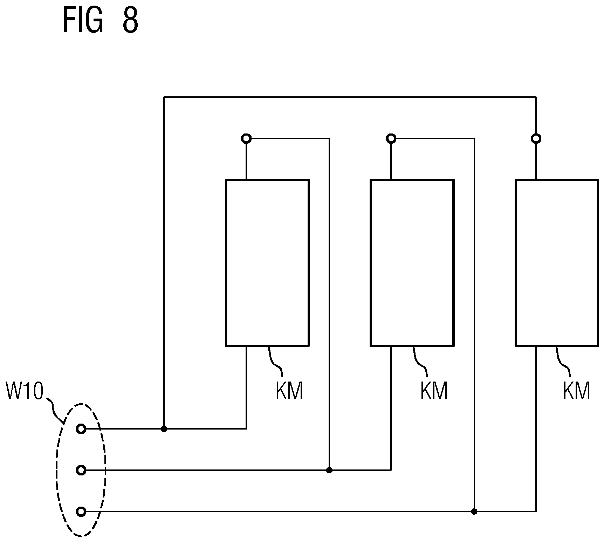

Die Figur 8 zeigt ein Ausführungsbeispiel für einen Umrichter, der beispielsweise zur Spannungsstabilisierung oder als Blindleistungssteller eingesetzt werden kann. Der Umrichter gemäß Figur 8 weist elektrisch im Dreieck verschaltete Konvertermodule KM auf. Die Konvertermodule KM umfassen jeweils in Reihe geschaltete Teilmodule TM gemäß den Figuren 1 bis 6 und eine Induktivität und sind beispielsweise wie in Figur 7 gezeigt ausgebildet.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

### Bezugszeichenliste

- 10: Ausschaltschaltung
- 11: Steuermodul
- 12: Schaltelement
- 13: Induktivität
- 30: Multilevelumrichter

- A: Anodenanschluss
- A1: Anschluss
- A2: Anschluss
- C: Kondensator
- C2: Kondensator
- D1: Freilaufdiode
- D2: Freilaufdiode
- D2a: Freilaufdiode
- D2b: Freilaufdiode
- D3: Freilaufdiode
- D3a: Freilaufdiode
- D3b: Freilaufdiode
- G10: Gleichspannungsseite
- G10a: Gleichspannungsanschluss
- G10b: Gleichspannungsanschluss
- Ia: Ausschaltstrom
- K: Kathodenanschluss
- KM: Konvertermodule
- L: Induktivität
- R: Reihenschaltung
- R2: Reihenschaltung
- R11: Anschluss
- R12: Anschluss
- R21: Anschluss
- R22: Anschluss
- R31: Anschluss
- R32: Anschluss
- RES1: Reihenschaltung
- RES2: Reihenschaltung
- RES3: Reihenschaltung
- S2: Schalter
- S2a: Einzelschaltelement
- S2b: Einzelschaltelement
- S3: Schalter
- S3a: Einzelschaltelement
- S3b: Einzelschaltelement
- T1: Thyristor
- T2: Thyristor
- TM: Teilmodul
- W10: Wechselspannungsanschluss
- ZW: Zwischenanschluss

## Patentansprüche

1. Teilmodul (TM) mit einem ersten äußeren Anschluss (A1), einem zweiten äußeren Anschluss (A2), einem ersten Schalter, einem zweiten Schalter (S2) und einem elektrischen Energiespeicher, wobei zwischen die zwei äußeren Anschlüsse (A1, A2) mindestens der erste Schalter und dazu parallel eine elektrische Reihenschaltung (R) geschaltet ist, die den zweiten Schalter (S2) und den elektrischen Energiespeicher umfasst, wobei der erste Schalter ein Thyristor (T1) ist oder einen Thyristor (T1) zumindest auch umfasst,
**dadurch gekennzeichnet, dass**
das Teilmodul (TM) eine Ausschaltschaltung (10) aufweist, die im aktiven Betrieb eingerichtet ist, einen Ausschaltstrom (Ia) in den Thyristor (T1) einzuspeisen, der von dem Kathodenanschluss (K) des Thyristors (T1) in Richtung Anodenanschluss (A) des Thyristors (T1) fließt und geeignet ist, einen von dem Anodenanschluss (A) zu dem Kathodenanschluss (K) durch den Thyristor (T1) fließenden Flussstrom zu kompensieren und den Thyristor (T1) auszuschalten, und wobei zu dem Thyristor (T1) elektrisch ein weiterer Thyristor (T2) antiparallel liegt, wobei
- die Ausschaltschaltung (10) eingangsseitig an den Energiespeicher angeschlossen ist und eingangsseitig mit der Spannung am Energiespeicher beaufschlagt ist und
- die Ausschaltschaltung (10) ausgangsseitig an den Kathodenanschluss (K) und den Anodenanschluss (A) des Thyristors (T1) angeschlossen ist.

2. Teilmodul (TM) nach Anspruch 1, wobei
- von dem ersten äußeren Anschluss (A1) in Richtung des zweiten äußeren Anschlusses (A2) gesehen der Thyristor (T1) in Durchlassrichtung liegt und
- zu dem zweiten Schalter (S2) eine Freilaufdiode (D2) parallel geschaltet ist, die von dem ersten äußeren Anschluss (A1) in Richtung des zweiten äußeren Anschlusses (A2) gesehen ebenfalls in Durchlassrichtung liegt.

3. Teilmodul (TM) nach einem der voranstehenden Ansprüche, wobei das Teilmodul (TM) ein elektrisches Halbbrückenmodul bildet, das zwischen dem ersten und zweiten äußeren Anschluss (A1, A2) ausschließlich eine positive Spannung ausgeben kann.

4. Teilmodul (TM) nach einem der voranstehenden Ansprüche, wobei zwischen die zwei äußeren Anschlüsse (A1, A2) des Teilmoduls (TM) parallel eine weitere elektrische Reihenschaltung (R2) geschaltet ist, die einen dritten Schalter (S3) und einen weiteren elektrischen Energiespeicher umfasst.

5. Teilmodul (TM) nach Anspruch 4, wobei
- zu dem zweiten Schalter (S2) eine Freilaufdiode (D2) parallel geschaltet ist, die von dem ersten äußeren Anschluss (A1) in Richtung des zweiten äußeren Anschlusses (A2) gesehen in Durchlassrichtung liegt, und
- zu dem dritten Schalter (S3) eine Freilaufdiode (D3) parallel geschaltet ist, die von dem ersten äußeren Anschluss (A1) in Richtung des zweiten äußeren Anschlusses (A2) gesehen in Sperrrichtung liegt.

6. Teilmodul (TM) nach Anspruch 1 oder 2, wobei das Teilmodul (TM) ein elektrisch äquivalentes Vollbrückenmodul bildet, das zwischen dem ersten und zweiten äußeren Anschluss (A1, A2) wahlweise eine positive Spannung, keine Spannung oder eine negative Spannung ausgeben kann.

7. Teilmodul (TM) nach einem der voranstehenden Ansprüche, wobei der zweite Schalter (S2) durch eine Reihenschaltung und/oder Parallelschaltung zweier oder mehr elektrischer Einzelschaltelemente (S2a, S2b) gebildet ist.

8. Teilmodul (TM) nach einem der voranstehenden Ansprüche 4 oder 5, wobei der dritte Schalter (S3) durch eine Reihenschaltung (R) und/oder Parallelschaltung zweier oder mehr elektrischer Einzelschaltelemente (S3a, S3b) gebildet ist.

9. Anordnung, insbesondere in Form einer Umrichteranordnung, eines Multilevelumrichters (30), einer Spannungsstabilisierungseinrichtung oder eines Blindleistungsstellers, wobei die Anordnung zumindest zwei elektrisch in Reihe geschaltete Teilmodule (TM) nach einem der voranstehenden Ansprüche aufweist.

10. Anordnung nach Anspruch 9, wobei
- die Anordnung eine Umrichteranordnung ist und zumindest einen Wechselspannungsanschluss, an dem ein Wechselstrom eingespeist oder entnommen werden kann, und zwei Gleichspannungsanschlüsse, an denen ein Gleichstrom eingespeist oder entnommen werden kann, aufweist,
- die Umrichteranordnung zumindest zwei parallel geschaltete Reihenschaltungen (RES1, RES2, RES3) umfasst, deren äußere Anschlüsse jeweils einen der Gleichspannungsanschlüsse der Umrichteranordnung bilden, und
- jede der parallel geschalteten Reihenschaltungen (RES1, RES2, RES3) jeweils mindestens zwei in Reihe geschaltete Teilmodule (TM) nach einem der voranstehenden Ansprüche 1 bis 8 umfasst.

11. Anordnung nach Anspruch 9, wobei die Anordnung drei elektrisch im Dreieck oder im Stern geschaltete Konvertermodule (KM) aufweist, die jeweils mindestens zwei in Reihe geschaltete Teilmodule (TM) nach einem der voranstehenden Ansprüche 1 bis 8 umfasst.

## Claims

1. Submodule (TM) having a first external connection (A1), a second external connection (A2), a first switch, a second switch (S2) and an electrical energy store,
wherein at least the first switch and, in parallel therewith, an electrical series circuit (R) that comprises the second switch (S2) and the electrical energy store are connected between the two external connections (A1, A2), wherein
the first switch is a thyristor (T1) or at least also comprises a thyristor (T1),
**characterized in that**
the submodule (TM) has a switch-off circuit (10) that is configured, in active operation, to feed a switch-off current (Ia) into the thyristor (T1), which switch-off current flows from the cathode connection (K) of the thyristor (T1) in the direction of the anode connection (A) of the thyristor (T1) and is suitable for compensating for a forward current flowing through the thyristor (T1) from the anode connection (A) to the cathode connection (K) and for switching off the thyristor (T1), and wherein a further thyristor (T2) is electrically in antiparallel with the thyristor (T1), wherein
- the switch-off circuit (10) is connected at input to the energy store and has the voltage at the energy store applied thereto at input and
- the switch-off circuit (10) is connected at output to the cathode connection (K) and the anode connection (A) of the thyristor (T1).

2. Submodule (TM) according to Claim 1, wherein
- the thyristor (T1) is in the forward-biased direction as seen from the first external connection (A1) in the direction of the second external connection (A2), and
- a freewheeling diode (D2) is connected in parallel with the second switch (S2) and is likewise in the forward-biased direction as seen from the first external connection (A1) in the direction of the second external connection (A2).

3. Submodule (TM) according to either of the preceding claims, wherein the submodule (TM) forms an electrical half-bridge module that is able to output exclusively a positive voltage between the first and second external connection (A1, A2) .

4. Submodule (TM) according to one of the preceding claims, wherein a further electrical series circuit (R2) that comprises a third switch (S3) and a further electrical energy store is connected in parallel between the two external connections (A1, A2) of the submodule (TM).

5. Submodule (TM) according to Claim 4, wherein
- a freewheeling diode (D2) is connected in parallel with the second switch (S2) and is in the forward-biased direction as seen from the first external connection (A1) in the direction of the second external connection (A2), and
- a freewheeling diode (D3) is connected in parallel with the third switch (S3) and is in the reverse-biased direction as seen from the first external connection (A1) in the direction of the second external connection (A2).

6. Submodule (TM) according to Claim 1 or 2, wherein the submodule (TM) forms an electrically equivalent full-bridge module that is able to selectively output a positive voltage, no voltage or a negative voltage between the first and second external connection (A1, A2).

7. Submodule (TM) according to one of the preceding claims, wherein the second switch (S2) is formed by a series circuit and/or parallel circuit of two or more electrical individual switching elements (S2a, S2b).

8. Submodule (TM) according to either of preceding Claims 4 and 5, wherein the third switch (S3) is formed by a series circuit (R) and/or parallel circuit of two or more electrical individual switching elements (S3a, S3b).

9. Arrangement, in particular in the form of a converter arrangement, of a multilevel converter (30), of a voltage stabilization device or of a reactive power controller, wherein the arrangement has at least two electrically series-connected submodules (TM) according to one of the preceding claims.

10. Arrangement according to Claim 9, wherein
- the arrangement is a converter arrangement and has at least one AC voltage connection at which an AC current is able to be fed in or tapped off, and two DC voltage connections at which a DC current is able to be fed in or tapped off,
- the converter arrangement comprises at least two parallel-connected series circuits (RES1, RES2, RES3) the external connections of which each form one of the DC voltage connections of the converter arrangement, and
- each of the parallel-connected series circuits (RES1, RES2, RES3) comprises in each case at least two series-connected submodules (TM) according to one of preceding Claims 1 to 8.

11. Arrangement according to Claim 9, wherein the arrangement has three converter modules (KM) electrically connected in delta or in star and that each comprise at least two series-connected submodules (TM) according to one of preceding Claims 1 to 8.

## Revendications

1. Sous-module (TM) ayant une première borne (A1) extérieure, une deuxième borne (A2) extérieure, un premier interrupteur, un deuxième interrupteur (S2) et un accumulateur d'énergie électrique,
dans lequel entre les deux bornes (A1, A2) extérieures est monté au moins un premier interrupteur et, en parallèle à celui-ci, un circuit (R) électrique série, qui comprend le deuxième interrupteur (S2) et l'accumulateur d'énergie électrique, dans lequel
le premier interrupteur est un thyristor (T1) ou comprend au moins aussi un thyristor (T1),
**caractérisé en ce que**
le sous-module (TM) a un circuit (10) de mise hors circuit, qui est agencé pour, en fonctionnement actif, injecter dans le thyristor (T1) un courant (Ia) de mise hors circuit, qui passe de la borne (K) de cathode du thyristor (T1) en direction de la borne (A) d'anode du thyristor (T1) et qui est propre à compenser un courant direct passant dans le thyristor (T1) de la borne (A) d'anode à la borne (K) de cathode et à mettre le thyristor (T1) hors circuit, et dans lequel un autre thyristor (T2) est monté électriquement, de manière antiparallèle avec le thyristor (T1), dans lequel
- le circuit (10) de mise hors circuit est raccordé, du côté de l'entrée à l'accumulateur et il lui est appliqué, du côté de l'entrée, la tension de l'accumulateur d'énergie, et
- le circuit (10) de mise hors circuit est raccordé, du côté de la sortie, à la borne (K) de cathode et la borne (A) d'anode du thyristor (T1).

2. Sous-module (TM) suivant la revendication 1,
dans lequel
- considéré de la première borne (A1) extérieure en direction de la deuxième borne (A2) extérieure, le thyristor (T1) est dans le sens direct, et
- en parallèle avec le deuxième interrupteur (S2) est montée une diode (D2) de roue libre, qui, considérée de la première borne (A1) extérieure en direction de la deuxième borne (A2) extérieure, est également dans le sens direct.

3. Sous-module (TM) suivant l'une des revendications précédentes,
dans lequel
le sous-module (TM) forme un module électrique en demi-pont, qui peut donner exclusivement une tension positive entre la première et la deuxième bornes (A1, A2) extérieures.

4. Sous-module (TM) suivant l'une des revendications précédentes,
dans lequel
entre les deux bornes (A1, A2) extérieures du sous-module (TM) est monté en parallèle un autre circuit (R2) électrique série, qui comprend un troisième interrupteur (S3) et un autre accumulateur d'énergie électrique.

5. Sous-module (TM) suivant la revendication 4,
dans lequel
- en parallèle avec le deuxième interrupteur (S2) est montée une diode (D2) de roue libre, qui, considérée de la première borne (A1) extérieure en direction de la deuxième borne (A2) extérieure, est dans le sens direct, et
- en parallèle avec le troisième interrupteur (S3) est montée une diode (D3) de roue libre, qui, considérée de la première borne (A1) extérieure en direction de la deuxième borne (A2) extérieure, est dans le sens inverse.

6. Sous-module (TM) suivant la revendication 1 ou 2,
dans lequel
le sous-module (TM) forme un module de pont complet équivalent électriquement, qui peut donner entre la première et la deuxième bornes (A1, A2) extérieures au choix, une tension positive, pas de tension ou une tension négative.

7. Sous-module (TM) suivant l'une des revendications précédentes,
dans lequel
le deuxième interrupteur (S2) est formé d'un circuit série ou d'un circuit en parallèle de deux ou de plus de deux éléments (S2a, S2b) individuels électriques de coupure.

8. Sous-module (TM) suivant l'une des revendications 4 ou 5 précédentes,
dans lequel
le troisième interrupteur (S3) est formé d'un circuit (R) série et/ou d'un circuit en parallèle de deux ou de plus de deux éléments (S3a, S3b) individuels électriques de coupure.

9. Montage, en particulier sous la forme d'un montage d'onduleur, d'un onduleur (30) à plusieurs niveaux d'un dispositif de stabilisation de la tension ou d'un régleur de la puissance réactive,
dans lequel
le montage a aux moins deux sous-modules (TM) suivant l'une des revendications précédentes montés en série.

10. Montage suivant la revendication 9,
dans lequel
- le montage est un montage d'onduleur et a au moins une borne de la tension alternative, à laquelle une tension alternative peut être injectée ou prélevée et deux bornes de la tension continue, auxquelles une tension continue peut être injectée ou prélevée,
- le montage d'onduleur comprend au moins deux circuits (RES1, RES2, RES3) série montés en parallèle, dont les bornes extérieures forment respectivement une des bornes de la tension continue du montage d'onduleur, et
- chacun des circuits (RES1, RES2, RES3) série montés en parallèle comprend respectivement au moins deux sous-modules (TM) suivant l'une des revendications 1 à 8 précédentes montés en série.

11. Montage suivant la revendication 9,
dans lequel
le montage a trois modules (KM) d'onduleur montés électriquement en triangle ou en étoile, qui comprennent chacun deux sous-modules (TM) suivant l'une des revendications 1 à 8 précédentes montés en série.
